(19) Europäisches Patentamt
European Patent Office
Office européen des brevets

(11) Publication number: 0 125 652 B1

# (12) EUROPEAN PATENT SPECIFICATION

(45) Date of publication of patent specification: 19.09.90

(51) Int. Cl.[5]: C 08 L 23/02, C 08 K 3/32, C 08 K 5/34

(21) Application number: 84105360.6

(22) Date of filing: 11.05.84

## (54) Self-extinguishing polyolefinic compositions having improved flame resistant characteristics and a high thermal stability.

(30) Priority: 12.05.83 IT 2106083

(43) Date of publication of application:
21.11.84 Bulletin 84/47

(45) Publication of the grant of the patent:
19.09.90 Bulletin 90/38

(84) Designated Contracting States:
BE DE FR GB NL SE

(56) References cited:
EP-A-0 023 353

(73) Proprietor: AUSIMONT S.r.l.
31, Foro Buonaparte
I-20100 Milano (IT)

(72) Inventor: Bertelli, Guido
56, Via Rosa Angelini
I-44100 Ferrara (IT)
Inventor: Locatelli, Renato
11, Via A. Meucci
I-44100 Ferrara (IT)

(74) Representative: Zumstein, Fritz jun., Dr. et al
Dr. F. Zumstein sen. Dr. E. Assmann Dr. R. Koenigsberger Dipl.-Ing. F. Klingseisen Dr. F. Zumstein jun. Bräuhausstrasse 4
D-8000 München 2 (DE)

EP 0 125 652 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to self-extinguishing polyolefinic compositions.

Several methods of imparting self-extinguishing properties to the olefinic polymers are known in the art. The less recent methods include those based on the addition of the polymers with metal compounds, particularly antimony and bismuth in combination with thermally unstable halogen compounds such as, for example, the chlorinated paraffinic waxes.

Such combinations are affected, however, by serious drawbacks, such as corrosion of the equipment utilized for processing the polymeric compositions, and the emission of obscuring smokes and of corrosive and toxic gases.

More recently the research has been directed to the use of combinations free from halogen compounds and based on ammonium polyphosphates in admixture with particular nitrogenous organic compounds (EP—A—0 023 353). They give rise, in case of combustion, to a consistent foamed carbonaceous structure, which acts as a thermal shield between flame and polymer.

Such systems exhibit, however, the drawback of possessing a limited resistance to heat and to thermo-oxidation. A certain improvement in the performances has been obtained, according to French patent application No. 2,352,857 in the name of the Applicant, with systems based on the combination of an ammonium polyphosphate with carbonylpiperazine.

One object of the present invention is to provide polyolefinic compositions characterized by the combination of high levels of self-extinguishing properties with an excellent resistance to heat and to thermo-oxidation.

Such compositions comprise:

1) from 35.5 to 87.0% by weight of an olefinic polymer or copolymer,

2) from 5 to 20% by weight, preferably 8 to 18% by weight, of an ammonium polyphosphate,

3) from 2 to 20% by weight, preferably 3 to 8% by weight, of polycarbonylpiperazine,

4) from 2 to 20% by weight, preferably 3 to 8% by weight, of melamine phosphate,

5) from 0.5 to 3% by weight, preferably 1 to 1.5% by weight, of titanium dioxide,

6) from 0.5 to 1.5% by weight, preferably 0.5 to 1.5% by weight, of a compound of formula RSH comprised in one of the following general (tautomeric) formulas:

(I) $(R_1—S—H)$

(II) $R_2=S$

in which:

S = a sulphur atom

$R_1$, $R_2$ = radicals selected from the groups of (a) imidazole, where $R_1$ and $R_2$ have respectively the formula

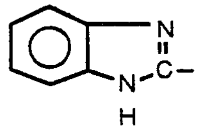 and 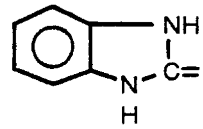

(b) uracyl, with $R_1$ and $R_2$ having respectively the formula

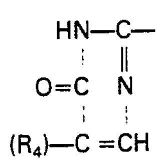 and 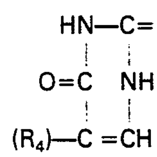

where $R_4$ = an alkyl radical containing from 1 to 4 carbon atoms, or hydrogen.

Some examples of olefinic polymers and copolymers which can form the compositions of the present invention are: polypropylene, ethylene-modified polypropylene, the mixes of polypropylene with up to 20% by weight of ethylene-propylene elastomeric copolymers, containing up to 50% by weight of copolymerized ethylene and said ethylene-propylene vulcanized elastomers.

Ammonium polyphosphates of general formula

$$(NH_4)_{n+2}\, P_nO_{3n+1}$$

wherein n is an integer ⩾2 are employable; n may be as high as 100; preferably, they have a molecular weight which is sufficiently high to guarantee a low water-solubility. Examples of polyphosphates are the commercial products "Exolit 263®" and "Exolit 422®" (manufactured by Benckiser Knappsack, G.m.b.H.) where n is greater than 50. Examples of compounds as per point 6) hereinbefore are

mercaptobenzoimidazole, 4-methylthiouracyl, thiouracyl. The melamine phosphate according to point 4) is a salt which can be prepared by reacting melamine and phosphoric acid (e.g. sold by SKW firm).

The compounds according to point 6) impart prevailingly antiaging properties to the compositions forming the object of the present invention, and are therefore suited to improve their resistance to heat and to thermo-oxidation. They are used in amounts ranging from 0.5 to 1.5% by weight referred to the composition.

The compositions of the invention may contain usual additives like common thermal stabilizers.

The compositions of the present invention are preparable according to conventional methods: for example, the polyolefin and the anti-flame additives are mixed in a Banbury vane mixer at the polyolefin plasticization temperature. The resulting mix is then extruded in a DOLCI die (screw diameter = 20 mm; length/diameter ratio of the screw = 23; screw speed = 20 rpm) at the temperature which is best suited to obtain a granulated product.

To determine the self-extinguishing properties of the polyolefinic compositions object of this invention it is operated as follows: plates having a 3 mm thickness are molded from the granulated product by means of a small CARVER-type press, by operating for 7 minutes at a pressure of 40 bar ($kg/cm^2$) and at a suitable temperature.

The self-extinguishing level was determined on the plates so prepared both by measuring (according to standard ASTM D-2863) the oxygen index, which expresses the lowest $O_2$ percentage in a $O_2/N_2$ mixture necessary for the specimen to continuously burn, and by following the UL-94 standards (published by "Underwriters Laboratories" — USA) which provide an evaluation of the plastic materials' self-extinguishing degree.

UL-94 standards contemplate various, more or less severe test conditions and permit to classify the specimen at different self-extinguishing levels.

In the tests reported on the Table, the Vertical Burning Test has been adopted, which permits to classify the material at the following decreasing levels: 94 V-0, 94 V-1 and 94 V-2.

Each test is carried out on a group of 5 specimens which may have a thickness of 0.64, 0.32 or 0.16 mm (¼, ⅛ or 1/16 inch).

The specimen, maintained in a vertical position by a proper support, is fired with flame at the lower end, and 2 lighting attempts of 10 seconds each are made.

The three above-mentioned levels of self-extinguishing power may be briefly defined as follows:

94 V-0 No specimen burns for more than 10 seconds after each flame application, and no burning particles fall therefrom. Furthermore, the total combustion time does not exceed 50 seconds for the 10 attempts made with the 5-specimen group.

94 V-1 Combustion times up to 30 seconds for each individual specimen and up to 250 seconds for the 10 attempts made with the 5-specimen group are allowed. Also at this level no specimen lets burning particles drop.

94 V-2 The allowable combustion times are the same as for level 94 V-1, but the fall of burning particles is allowed.

For the tests in oven at 150°C with induced air circulation, from the plates there are obtained, by punching, small bars of type I, as is described in ASTM D-638: the colour change evaluation is carried out visually, while the ageing test due to thermo-oxidation is effected by evaluating the embrittlement, which is coincident with the appearing of the first pulverization point.

The following example is given with a view to illustrating, but not to limiting, the present invention. The compositions of this example were prepared as described hereinbefore, by using a DOLCI-type die having a screw diameter of 20 mm, a screw's length/diameter ratio = 23, and operating at a screw speed of 20 rpm, at a temperature of 200—240°C.

Example

This example illustrates compositions A through G (out of which the ones from A to D are reference compositions) containing compounds of imidazole and of uracyl, the characteristics of which are reported on the following Table.

TABLE

| | A | B | C | D | E | F | G |
|---|---|---|---|---|---|---|---|
| Formulation | | | | | | | |
| Polypropylene | 75,4 | 74,4 | 75,4 | 74,4 | 73,4 | 73,4 | 72,4 |
| Ammonium polyphosphate (Exolit 422®) | 18 | 18 | 10 | 10 | 10 | 10 | 10 |
| Polycarbonylpiperazine | 6 | 6 | 6 | 6 | 6 | 6 | 6 |
| Melamine phosphate | — | — | 8 | 8 | 8 | 8 | 8 |
| Titanium dioxide | — | 1 | — | 1 | 1 | 1 | 2 |
| Mercaptobenzoimidazole | — | — | — | — | 1 | — | 1 |
| 4-Methylthiouracyl | — | — | — | — | — | 1 | — |
| Irganox 1010® | 0,2 | 0,2 | 0,2 | 0,2 | 0,2 | 0,2 | 0,2 |
| Lauryl thiopropionate | 0,4 | 0,4 | 0,4 | 0,4 | 0,4 | 0,4 | 0,4 |
| Self-extinguishing characteristics on a 3-mm thick specimen | | | | | | | |
| Oxygen index | 31,5 | 34 | 33 | 34,5 | 32 | 31,5 | 31,5 |
| UL-94 | 1"10"8 | 1"3"1"3" | 1"2"1"1" | 1"2"1"1" | 1"1"1"1" | 1"1"1"1" | 1"1"1"1" |
| Specimen colour due to ageing at 150°C after days: | | | | | | | |
| 0 | + | + | + | + | + | + | + |
| 3 | +++++ | +++ | +++++ | +++ | ++ | ++ | ++ |
| 7 | +++++ | ++++ | +++++ | ++++ | +++ | +++ | +++ |
| 14 | ++++++ | +++++ | ++++++ | +++++ | +++ | ++++ | +++ |
| 21 | ++++++ | +++++ | ++++++ | +++++ | +++ | ++++ | +++ |
| 30 | ++++++ | +++++ | ● | +++++ | ++++ | +++++ | +++ |
| 45 | ● | ● | | ● | ++++ | ● | ++++ |
| 60 | | | | | ● | | ● |

+white; ++ivory; +++light brown; ++++brown; +++++dark brown; ++++++black; ●pulverization.

**Claims**

1. Polymeric compositions endowed with self-extinguishing characteristics when exposed to the flame, comprising, by weight:

1) from 35.5 to 87% of at least a polyolefin,

2) from 5 to 20% of an ammonium polyphosphate;

3) from 2 to 20% of polycarbonylpiperazine;

4) from 2 to 20% of melamine phosphate;
5) from 0.5 to 3% of titanium dioxide;
6) from 0.5 to 1.5% of a compound of formula R—SH wherein R is a radical of imidazole or of uracyl.

2. Use of the compositions according to claim 1 for the preparation of manufactured articles.

**Patentansprüche**

1. Polymerzusammensetzungen mit selbstverlöschenden Eigenschaften, wenn sie Flammen ausgesetzt sind, enthaltend, auf das Gewicht bezogen:
1) 35,5 bis 87% zumindest eines Polyolefins,
2) 5 bis 20% eines Ammoniumpolyphosphats,
3) 2 bis 20% Polycarbonylpiperazin,
4) 2 bis 20% Melaminphosphat,
5) 0,5 bis 3% Titandioxid,
6) 0,5 bis 1,5% einer Verbindung der Formel R—SH, worin R für einen Imidazol- oder Uracylrest steht.

2. Verwendung der Zusammensetzungen gemäß Anspruch 1 zur Herstellung von Erzeugnissen.

**Revendications**

1. Compositions à base de polymères ayant des caractéristiques d'auto-extinguibilité lorsqu'elles sont exposés à une flamme, comprenant, en poids:
1) de 35,5 à 87% d'au moins une polyoléfine;
2) de 5 à 20% d'un polyphosphate d'ammonium;
3) de 2 à 20% de polycarbonylpipérazine;
4) de 2 à 20% de phosphate de mélamine;
5) de 0,5 à 3% de dioxyde de titane;
6) de 0,5 à 1,5% d'un composé de formule R—SH, dans laquelle R est un radical imidazole ou uracyle.

2. Utilisation des compositions selon la revendication 1, pour la préparation d'objets manufacturés.